# EUROPEAN PATENT SPECIFICATION

(11) **EP 2 783 785 B1**
(45) Date of publication and mention of the grant of the patent: **20.10.2021**
(21) Application number: 14162153.2
(22) Date of filing: 27.03.2014
(51) Int. Cl.: B23K 26/06, C03B 33/04, C03B 33/09

(54) **METHOD FOR SHAPE CUTTING A GLASS SHEET**
VERFAHREN ZUM FORMSCHNEIDEN EINER GLASSCHEIBE
PROCÉDÉ DE COUPE DE FORME D'UNE FEUILLE DE VERRE

(30) Priority: 27.03.2013 IT TO20130252; 15.01.2014 IT TO20140021
(43) Date of publication of application: 01.10.2014
(73) Proprietor: Bottero S.p.A., Cuneo (IT)
(72) Inventor: Ghinamo, Leonardo, 12100 Cuneo (IT); Olocco, Guido, 12012 Boves (IT); Ostorero, Marcello, 12010 Vignolo (IT); Ferrari, Simone, 12100 Cuneo (IT); Viglietti, Davide, 12080 Pianfei (IT)
(74) Representative: Boggio, Luigi

(56) References cited:
- CA-A- 875 961
- DE-A1- 10 013 688
- GB-A- 1 258 136
- JP-A- 2003 181 826
- US-A1- 2013 134 200
- US-A1- 2013 221 053
- US-B1- 6 829 910

## Description

The present invention relates to a method for shape cutting a glass sheet.

For shape cutting a glass sheet, i.e. along a cutting line having at least one curved stretch, it is known to make a scoring line on an extended surface of the sheet and mechanically force the sheet causing the breakage along the scoring line.
Alternatively, following the scoring, the portion of the sheet in the neighborhood of the scoring line is gradually heated by means of a naked flame, generally an oxyacetylene flame, and then immediately refrigerated with a refrigerating fluid, generally a refrigerating fluid or a gas. The sudden cooling of the surface of the sheet in direct contact with the refrigerating fluid generates stresses which cause the breakage of the sheet along the scoring line, the localized weakening caused by the scoring line itself prevailing.
Such a breakage method, which cannot be applied to thick sheets, is also seldom used for thin sheets, because the breakage process is difficult to control, and thus the breakage often occurs spontaneously along different cutting lines from those expected, causing the inevitable rejection of the obtained pieces.
This is mainly due to the presence of the refrigerating fluid, which on one hand, causes sudden cooling, thus subjecting the sheet to thermal gradients which vary along the scoring line by effect of the conductivity of the glass sheet and, on the other hand, fouls the sheet itself, which later needs to be cleaned.
Furthermore, the breakage method described above cannot be applied to the cutting of the so-called "coated" glass sheets, at least one extended surface of which is coated with metallic powders or oxides, commonly known as "low-E", which would be inevitably removed or in all cases damaged by the refrigerating fluids and by the naked flames, and to "laminated" glass sheets because the intermediate layer of plastic material present in such sheets must be heated and softened to be cut and the refrigerating fluids perform an opposite operation.
Finally, part of the fluid used inevitably either evaporates or is dispersed in the working environment, and therefore suction devices synchronized with the breakage of the sheets must be provided.

Other ways to cut a glass sheet are disclosed for example in US 2013/221053 A1 and in DE 100 13 688 A1, in CA 875 961 A and US 2013/134200 A1 and in US6 829 910 B1.

It is the object of the present invention to provide a method for shape cutting a glass sheet, which allows to solve the problems illustrated above in simple and cost-effective manner and, in particular, allows, with respect to the known solutions, to obtain a "dry" cut, i.e. totally free from heating or refrigerating liquids or gases, and without using flames or heating liquids of the sheet to be cut.

According to the present invention, a method is provided for shape cutting a glass sheet as disclosed in claim 1.

The invention will now be described with reference to the accompanying drawings which illustrate non-limitative embodiments thereof, in which:
figure 1 shows a machine for cutting a glass sheet according to a preferred embodiment of the method of the present invention, diagrammatically and substantially in blocks;
figure 2 shows a section view, on a highly magnified scale, of a preferred embodiment of a detail in figure 1;
figure 3 is a figure similar to figure 2 and shows a variant of a detail in figure 2;
figures 4 and 5 show the temperature variations in a monolithic glass sheet and in a laminated glass sheet cut according to the cutting method of the present invention, respectively;
figure 6 is a figure similar to figure 2 and shows a second preferred embodiment of a detail in figure 1;
figure 7 is a figure similar to figure 6 and shows a variant of a detail in figure 6;

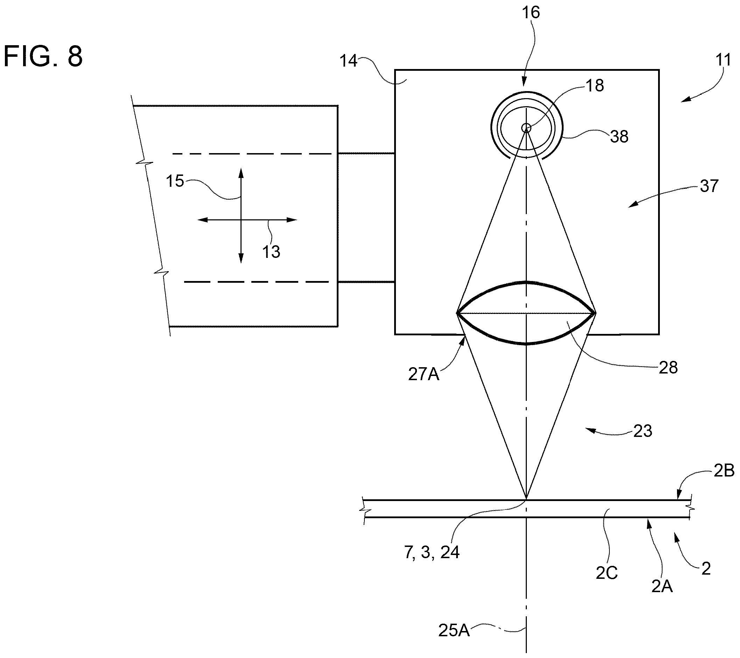

figure 8 shows a section view, on a highly magnified scale, of a third preferred embodiment of a detail in figure 1; and
figure 9 shows a section view, on a highly magnified scale, of a fourth preferred embodiment of a detail in figure 1.

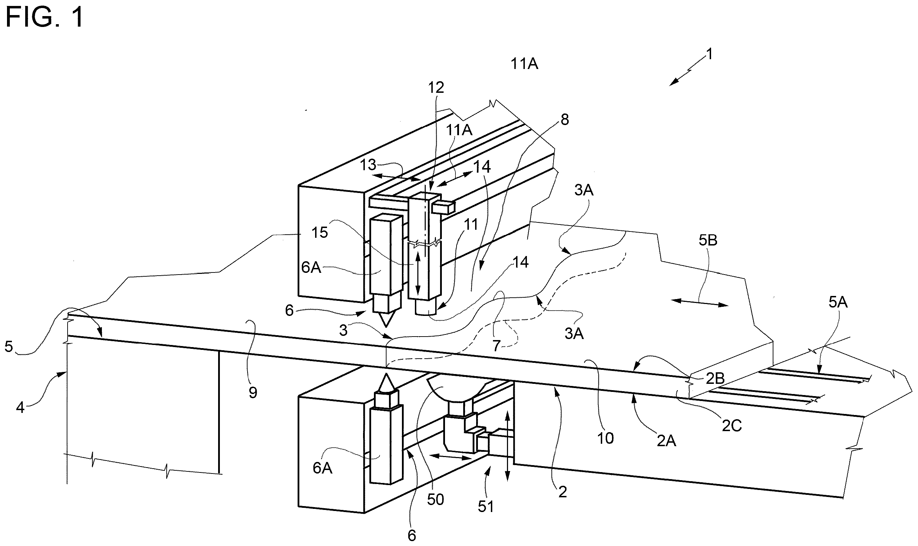

In figure 1, reference numeral 1 indicates as a whole a machine for cutting a glass sheet 2 along a cutting line 3 having one or more curved stretches 3A and extending along the opposite extended surfaces 2A and 2B of the sheet 2.

The machine 1 comprises a supporting frame 4 defining a resting plane 5 for the sheet 2 and a motorized actuating device 5A to translate the sheet 2 on the resting plane 5 in a direction 5B. In the particular example described, the device 5A is of the belt type; alternatively, it may be of the type with clamps or suction cups movable in direction 5B.

The machine 1 then comprises a double gantry scoring device 6 of the sheet, comprising for each gantry a wheel scoring device 6A (known in itself and not described in detail) for making a scoring line 7 coinciding with the cutting line 3 either only on surface 2A or on both surfaces 2A,2B of a monolithic glass sheet, or again, on each of the surfaces 2A and 2B of a laminated glass sheet.

Alternatively, according to a variant, the devices 16A are replaced by laser scoring devices.

The machine 1 further comprises a thermal cutting assembly 8 for heating a zone of the sheet 2 arranged along the cutting line 3 and causing the gradual and spontaneous breakage of the sheet 2 itself and the formation of two pieces of sheet 9 and 10, either already separated, in the case of monolithic glass sheets, or still joined to each other by the intermediate layer of thermoplastic material, in the case of laminated glass sheets.

Again with reference to figure 1, the thermal assembly 8 comprises an electric light bulb 11, which extends over the resting plane 5 facing the surface 2B of the sheet 2 at the cutting line 3 in use.

Alternatively, according to a variant (not shown), the light bulb 11 extends under the resting plane 5 and in position facing the surface 2A in use.

In both cases, the light bulb 11 comprises a casing 14 thereof and is coupled to the frame 4 by means of a motorized actuating assembly 12 (known in itself and not described in detail) to translate in a direction 13 parallel to the resting plane 5, to be displaced from and towards the resting plane 5 in a vertical direction 15 orthogonal to the resting plane 5 itself and to run in opposite directions in a direction 11A orthogonal to directions 13 and 15 and parallel to the resting surface 5 itself.

The light bulb 11 is of the incandescent type and comprises a rectilinear, annular or U-shaped incandescent source 18, e.g. of the filament type, and emits, in use, a thermal beam 19 diverging towards the sheet 2 and having a continuous spectrum and wavelength varying between 0.3 and 3 micron.
Preferably, but not necessarily, the thermal assembly 8 further comprises a device 22 for concentrating the thermal beam 19 emitted by the source 18 and generating an output thermal beam 23 either concentrated or converging in a focusing point 24 arranged over the plane 5. According to the thickness and chemical-physical properties of the sheet 2, the focusing point 24 is arranged, in use, either inside or outside the sheet 2 along a line orthogonal to the surfaces 2A,2B, on the surface 2A or 2B and intersects the cutting line or is arranged tangent to the cutting line itself.

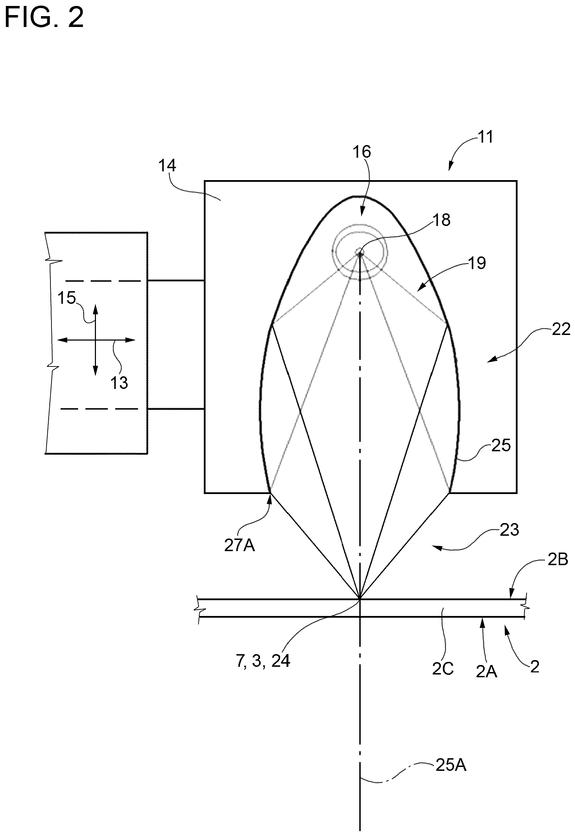

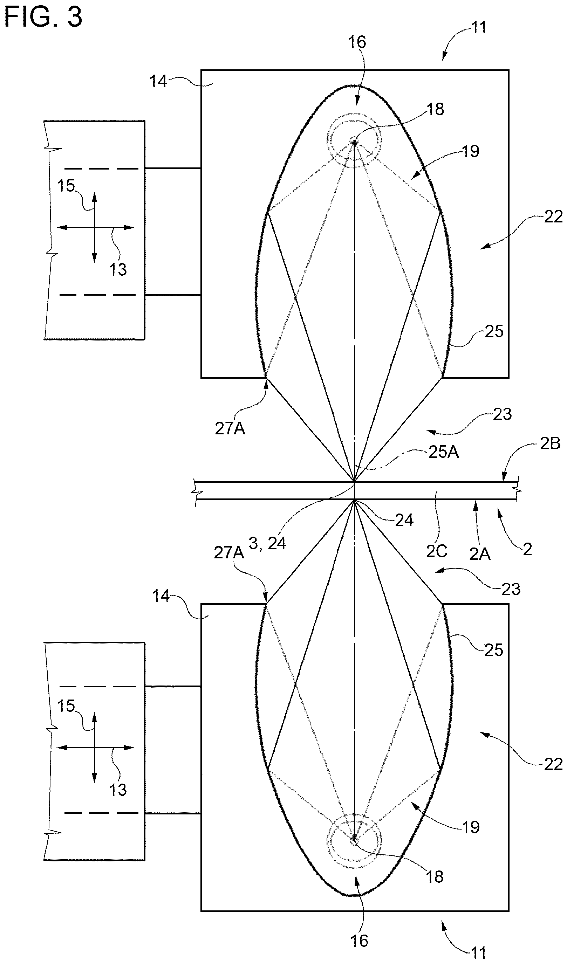

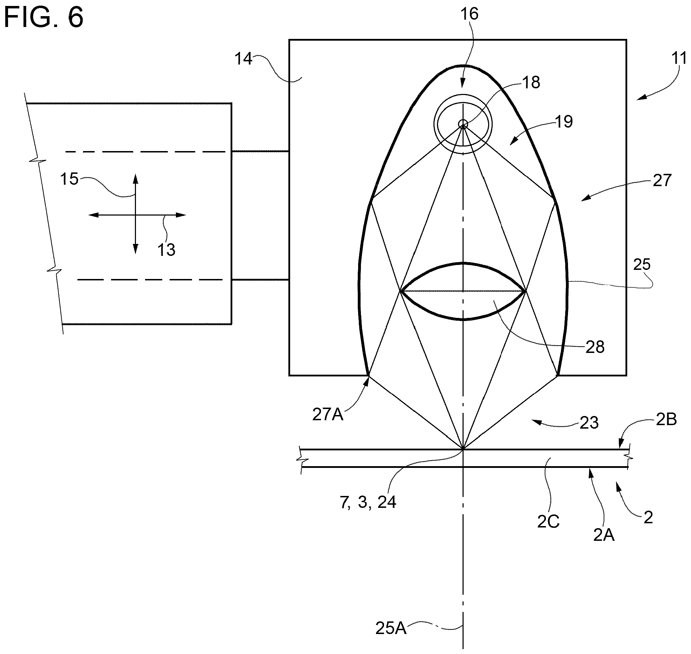

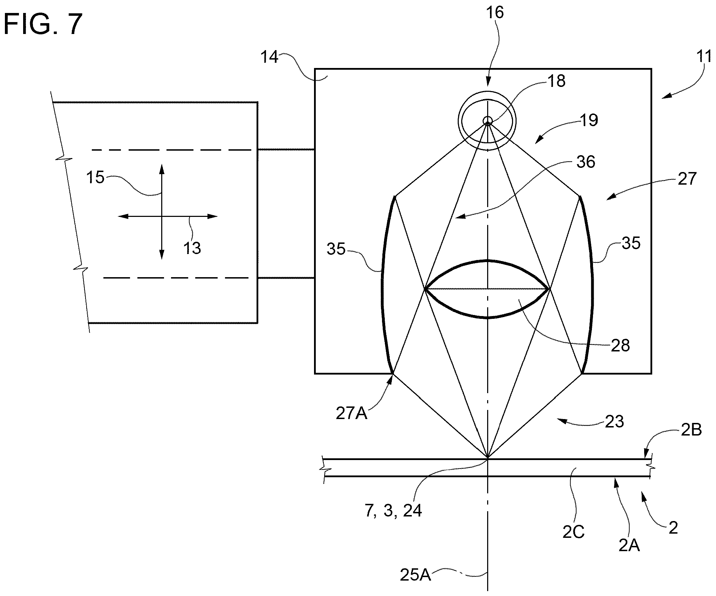

With reference to figure 2, the concentration device 22 conveniently comprises a concave reflecting body 25, preferably with an elliptical or parabolic section, which is preferably symmetric with respect to the plane 25A. Alternatively, according to a variant, the reflecting body 25 is not symmetric with respect to the plane 25A thus generating an asymmetric output beam. Conveniently, the reflecting body 25 houses the source 18 arranged in a focus of the reflecting body 25 itself.
The reflecting body 25 has an outlet opening 27A and, conveniently, a geometry such as to intercept and deflect the maximum amount of the thermal beam 19 emitted by the filament 18 in the mentioned focusing point 24. In the condition in which the point 24 lays on the surface 2B, the temperature of the sheet 2 reaches a peak or a maximum value thereof on the surface 2B and on the cutting line and gradually decreases towards the surface 2A.

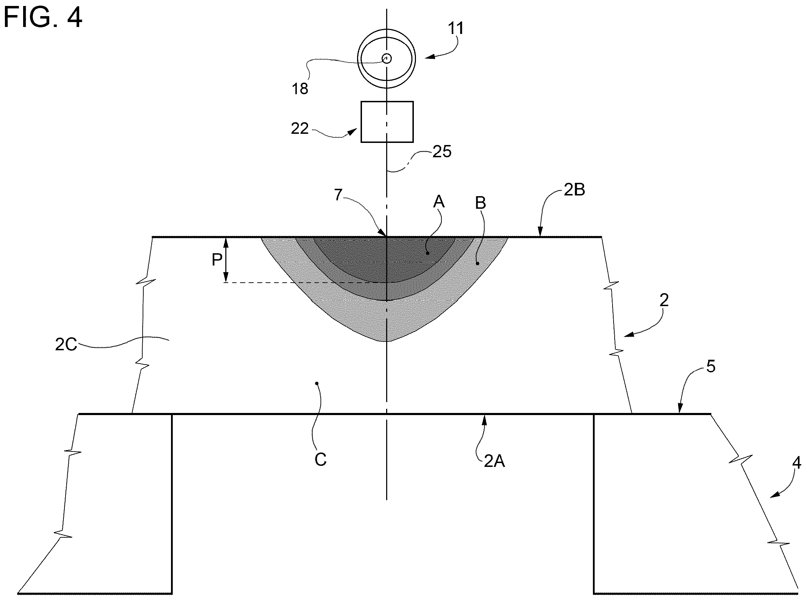

Figure 4 shows the temperature variation of a monolithic glass sheet which is nineteen millimeters thick etched only on surface 2B using a light bulb 11 having a power of approximately 300W. As shown in such a figure 4, the temperature assumes a maximum, approximately constant value in a semicircular zone A near the surface 2B and for a depth P of 5 millimeters. The measured value of such a maximum temperature is equal to approximately 120 °C. The temperature decreases and then reaches a temperature of approximately 90°C in the middle of the sheet in a zone B and a temperature of approximately 70 °C in a zone near the surface 2A.

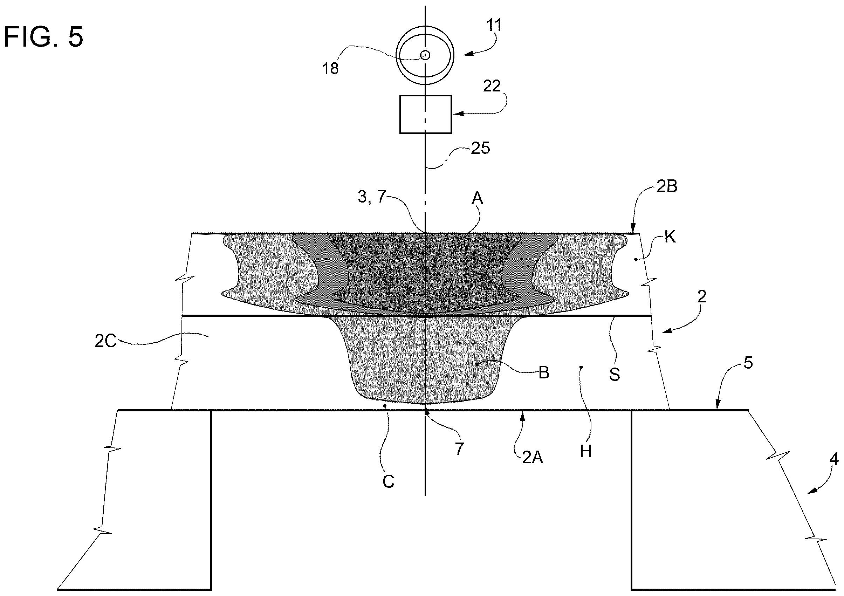

The figure 5 shows the temperature variation in a laminated glass sheet 2 comprising two side glass sheets H and K both etched and three millimeters thick and an intermediate layer S of thermoplastic material which is 0.38 millimeters thick using a light bulb 11 having a power of approximately 300 W. As shown in this figure 5, the temperature assumes a maximum, approximately constant value in a practically rectangular zone A of thickness equal to or very close to the thickness of the glass sheet K facing the light bulb 11. The measured value of such a maximum temperature is equal to approximately 130°C. The temperature then decreases suddenly because a great amount of the heat is absorbed by the intermediate layer S, which heats up promoting the subsequent distancing of the pieces 9,10, to then stabilize on the sheet H at a value of approximately 90°C for the entire thickness of the sheet H itself except for a surface layer C in which a temperature of approximately 60-70°C is measured.
The thermal gradient generated between the surfaces 2A and 2B causes the breakage of the sheet 2 along the scoring line 7, and thus along the breakage line 3, in a time varying from 120 to 140 seconds, in the case of the monolithic glass sheet, and of 30-50 seconds, in the case of the laminated sheet.
The embodiment shown in figure 3 differs from the embodiment shown in figure 1 solely in that two light bulbs 11 are provided with respective concentration devices 22 arranged on opposite parts of the resting plane 5 and of the sheet 2 to send two opposing output beams 23 to the sheet 2 itself. In such a solution, the assembly 8 may also not include the concentration devices 22. The other conditions being equal, the use of a pair of light bulbs 11 with or without concentration device conditions allows a considerable reduction of the breakage time with respect to the single light bulb solution. Specifically, by way of example, sending the two opposing beams on the sheet 2 allows to reduce the breakage time by 30%-40% with respect to the case of a single beam 23.
According to a variant shown in fig. 6, the concentration device 22 comprises, in addition to the reflecting body 25, at least one focusing lens 28 conveniently, but not necessarily, biconvex, distinct from the reflecting body 25 and arranged along the plane 25A to deflect part of the beam 19 coming directly from the source 18 and/or reflected by the reflecting body 25 and to focus it in the focusing point 24, as in the case of figure 6, or in a further focusing point distanced from the focusing point 24 itself.
According to a further variant shown in figure 7, the reflecting body 25 is replaced by a pair of concave side reflecting screens arranged on opposite sides of the plane 25A.
Conveniently, the screens 35 have an upper end distanced from the source 18, have respective concavities facing each other and are specular with respect to the plane 25A to deflect a part 36 of the heating beam 19 towards the glass sheet 2 and to focus it in the point 24.
According to a further embodiment (not shown), the lens 28 is replaced by an assembly of lenses adapted to receive the heating rays coming directly from the source 18 or reflected by the screens 35 and to focus them on one or more focusing points arranged in the neighborhood of the focusing point 24, for example along the plane 25A.
The focusing device shown in figure 6 differs from the device 22 in that it is free from the reflecting body 25 or the screens 35. In such a solution, a part 37 of the heating beam 19 emitted by the source 18 and intersecting the lens 28 is focused in point 24. Conveniently, the remaining part of the heating beam 19 is reflected by a layer 38 of reflecting material which partially surrounds the source 18 itself.

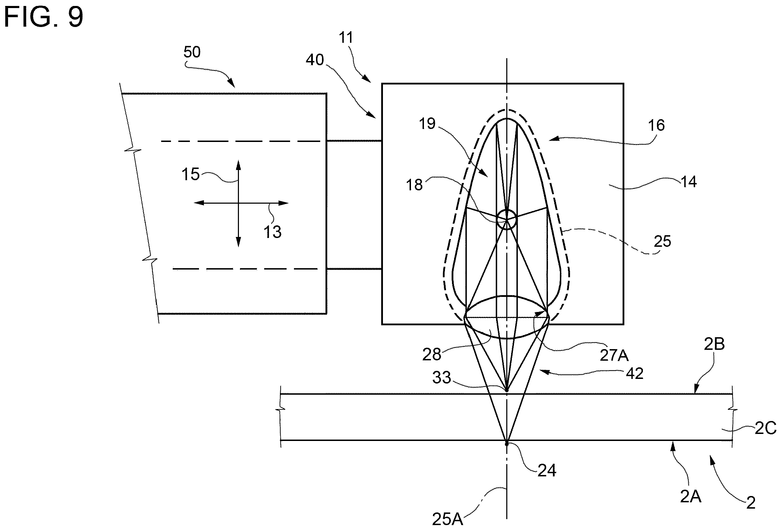

Figure 9 shows a focusing assembly 40, which differs from the focusing assemblies 22 and 27 in that the reflecting body 25 and the lens 28 defines part of the bulb 16 of the light bulb 11 which encloses the source 18; in the particular example described, the lens 28 is arranged downstream of the reflecting body 25 in the advancement direction of the heating beam 19 to at least partially close the opening 27A. In such a solution, the reflecting body 25 focuses part 42 of the heating beam which does not cross the lens 28 along the focusing point 24, which, in the particular example described, is arranged either adjacent to or in contact with the surface 2B, while the remaining part of the heating beam 19 which crosses the lens 28 because it is directed towards the lens 28 itself or is reflected on the lens 28 by the reflecting body 25 is focused by the lens 28 in a focusing point 33 which, in the particular example described, is arranged near the surface 2A itself and, in all cases, distanced from the focusing point 24 in a direction orthogonal to the extended surfaces 2A,2B of the sheet 2.
In the solutions which include a single light bulb 11, it has been empirically found that the breakage time and/or the heat needed for breakage may be additionally reduced by providing a concave reflecting body 50 capable of reflecting the part of the thermal beam 23 which crosses the sheet 2 itself towards the surface 2A of the sheet 2 on the part opposite to the resting plane 5 with respect to the light bulb 11.
In the particular example described, the reflecting body 50, which constitutes part of the assembly 8, is actuated by an actuating device 51, known in itself and not described in detail, adapted to displace the reflecting body 50 itself vertically from and towards the surface 2A and horizontally in a direction parallel 52 to direction 13 from and towards an advanced operating position, which the light bulb 11 faces.

In use, the light bulb 11 and the concentration device are positioned at an end of the provided cutting line 3 in case of open cuts or in an intermediate point of the cutting line itself in case of closed cuts; the light bulb is turned on and a breakage front is triggered on the sheet. The triggering of the breakage front requires a time varying from 30 to 120 seconds for glass sheets of thickness varying from 3 to 19 millimeters. After triggering the breakage, the light bulb is gradually displaced along the scoring line or cut or along a path parallel to the scoring or cutting lines themselves at a speed varying from 1 to 3 mm/s for glass sheets of thickness from 3 and 19 millimeters and in all cases such to cause a continuous advancement of the breakage front along the cutting line itself.

In the machine 1, the mentioned displacement of the light bulb 11 and, thus, the propagation of the breakage along the cutting line is carried out by combining the displacement of the light bulb in the direction 11A and the translation of the sheet 2 in the direction 5B.
According to a variant, the light bulb 11 carried by a motorized articulated arm (known in itself), adapted to displace the light bulb 11 and the respective concentration device, when present, along the cutting line 3 maintaining the sheet 2 stationary on the resting plane 5.
From the above, it is apparent that the concentration of a thermal beam along at least a focusing point which may intersect the sheet itself or not allows, even with relatively low power light bulbs, such as the described incandescent light bulbs, to obtain the spontaneous breakage of the sheet in short time and with a finished product quality comparable to, and in some cases better than, that of the pieces obtained using the traditional breakage methods. The breakage times increase considerably and are even doubled in absence of the concentration device of the beam emitted by the thermal source 18.
The quality of the pieces 9 and 10 may be in some cases better when the scoring is carried out by means of laser heads. In such conditions, the scoring already produces a first heating of the sheet along the scoring line and the incandescent light bulb 11 carries out a second heating which causes the breakage of the sheet itself. It is thus apparent that in such conditions the heat to be supplied by means of the light bulb 11 is lower than that needed in case of "cold" sheet, i.e. scored by means of traditional wheel tools, and therefore lower power light bulbs are sufficient to break in the same time. Instead, higher power light bulbs allow to reduce the breakage time, i.e. to increment the propagation speeds of the breakage front.
Additionally, with respect to the known solutions, the breakage occurs in total absence of refrigerating or heating liquids or gases/mixtures because in the sheet 2 the thermal gradient needed to obtain the breakage of the sheet is obtained simply by sending a thermal beam emitted by an incandescent electric source which may be either focused or not, for example, according to the thickness of the sheet.
Furthermore, from the above it is apparent that the breakage times of the sheets may considerably vary according to the features of the light bulb used, and in particular according to the power of the light bulb itself, the position of the focusing point or points and the scoring type, which may promote the triggering and gradual advancement of the breakage front or not.
Finally, from the above it is apparent that the described breakage method may also be applied to rectilinear cuts, in particular to rectilinear cuts possibly extending between two consecutive curved stretches.

## Claims

1. A method for shape cutting a glass sheet, the method comprising the steps of placing the glass sheet on a resting plane; making at least one scoring line having at least one curved stretch on an extended surface of the sheet and then breaking the sheet along said scoring line, **characterized in that** the breakage of said sheet is carried out using at least one light bulb having at least one incandescent source, directing the thermal beam emitted by the incandescent source towards the scoring line on an extended surface of said sheet on which said scoring line is obtained or an extended surface of said sheet opposite to the one on which said scoring line is obtained; generating a thermal gradient between the opposite surfaces of said sheet and a spontaneous breakage front in a point of the scoring line solely with said light bulb, and displacing said electric light bulb and said sheet with respect to each other and said thermal beam along a path either parallel to or coinciding with said scoring line thus causing the gradual spontaneous advancement of the breakage front of the sheet along the scoring line.

2. A method according to claim 1, **characterized in that** it includes making a respective scoring line on each of the opposite surfaces of the glass sheet and directing a respective thermal beam towards one or both of said scoring lines.

3. A method according to claim 1 or 2, **characterized in that** it includes directing the thermal beam emitted by one of said thermal sources to at least one focusing zone intersecting said glass sheet and crossed by said cutting line.

4. A method according to any one of the preceding claims, **characterized in that** it includes concentrating the thermal beam emitted by said thermal source in a focusing point which may either intersect said glass sheet or not.

5. A method according to claim 4, **characterized in that** said focusing point is arranged within said scoring line.

6. A method according to claim 4, **characterized in that** said focusing point is tangent to one of said extended surfaces of said glass sheet.

7. A method according to any one of the preceding claims, **characterized in that** it includes intercepting at least part of said thermal beam crossing said sheet and reflecting it back onto the sheet itself.

8. A method according to any one of the claims from 4 to 6, **characterized in that** the concentration of said thermal beam is carried out by using reflecting means at least partially surrounding said thermal source to deflect said emitted thermal beam onto said thermal source.

9. A method according to claim 8, **characterized in that** concentration of said thermal beam is carried out by using focusing means which are different and distinct from said reflecting means and by deflecting at least part of said thermal beam either direct or reflected by said reflecting means and focusing it in a further focusing point either coinciding with or distinct from said focusing point.

10. A method according to any one of the preceding claims, **characterized in that** it includes preheating said sheet with a thermal source different from said light bulb before generating said thermal gradient with said light bulb.

## Patentansprüche

1. Verfahren zum Formschneiden einer Glasplatte, wobei das Verfahren die Schritte des Anordnens der Glasplatte auf einer Auflageebene; des Herstellens mindestens einer Ritzlinie mit mindestens einem gebogenen Stück auf einer erweiterten Oberfläche der Platte und des anschließenden Brechens der Platte entlang der Ritzlinie aufweist, **dadurch gekennzeichnet, dass** das Brechen der Platte unter Verwendung mindestens einer Glühlampe mit mindestens einer Glühlichtquelle erfolgt, wobei der von der Glühlichtquelle emittierte Wärmestrahl in Richtung der Ritzlinie in einer erweiterten Oberfläche der Platte, in welcher die Ritzlinie ausgebildet ist, oder einer erweiterten Oberfläche der Platte, welche derjenigen, in welcher die Ritzlinie ausgebildet ist, gegenüberliegt, gerichtet wird; Erzeugen eines Temperaturgradienten zwischen den gegenüberliegenden Oberflächen der Platte und einer Spontanbruchfront an einem Punkt der Ritzlinie ausschließlich mittels der Glühlampe, und Bewegen der Glühlampe und der Platte relativ zueinander und des Wärmestrahls entlang eines Weges entweder parallel zu oder koinzidierend mit der Ritzlinie, wodurch ein allmähliches spontanes Fortschreiten der Bruchfront der Platte entlang der Ritzlinie bewirkt wird.

2. Verfahren nach Anspruch 1, **dadurch gekennzeichnet, dass** es das Ausbilden einer jeweiligen Ritzlinie in jeder der gegenüberliegenden Oberflächen der Glasplatte und das Richten eines jeweiligen Wärmestrahls in Richtung einer oder beider Ritzlinien aufweist.

3. Verfahren nach Anspruch 1 oder 2, **dadurch gekennzeichnet, dass** es das Richten des von einer der Wärmequellen emittierten Wärmestrahls auf mindestens eine Fokussierungszone, welche sich mit der Glasplatte schneidet und von der Schnittlinie gekreuzt wird, aufweist.

4. Verfahren nach einem der vorhergehenden Ansprüche, **dadurch gekennzeichnet, dass** sie das Konzentrieren des von der Wärmequelle emittierten Wärmestrahls an einem Fokuspunkt, der sich mit der Glasscheibe schneiden kann oder nicht, aufweist.

5. Verfahren nach Anspruch 4, **dadurch gekennzeichnet, dass** der Fokuspunkt in der Ritzlinie angeordnet ist.

6. Verfahren nach Anspruch 4, **dadurch gekennzeichnet, dass** der Fokuspunkt eine der erweiterten Flächen der Glasplatte tangiert.

7. Verfahren nach einem der vorhergehenden Ansprüche, **dadurch gekennzeichnet, dass** es das Abfangen eines Teils des Wärmestrahls, der die Platte durchquert, und das Reflektieren desselben zurück auf die Platte selbst aufweist.

8. Verfahren nach einem der Ansprüche 4 bis 6, **dadurch gekennzeichnet, dass** das Konzentrieren des Wärmestrahls unter Verwendung von reflektierenden Einrichtungen durchgeführt wird, welche die Wärmequelle zumindest teilweise umgeben, um den emittierten Wärmestrahl auf die Wärmequelle umzulenken.

9. Verfahren nach Anspruch 8, **dadurch gekennzeichnet, dass** das Konzentrieren des Wärmestrahls unter Verwendung von Fokussiereinrichtungen, welche zu den reflektierenden Einrichtungen unterschiedlich und von diesen verschieden sind, und durch Umlenken mindestens eines Teils des Wärmestrahls entweder direkt oder durch Reflektieren durch die reflektierenden Einrichtungen und Fokussieren desselben an einem weiteren Fokuspunkt, der entweder mit dem genannten Fokuspunkt zusammenfällt oder von diesem verschieden ist, durchgeführt wird.

10. Verfahren nach einem der vorhergehenden Ansprüche, **dadurch gekennzeichnet, dass** es das Vorwärmen der Platte mit einer Wärmequelle, die von der Glühlampe verschieden ist, vor dem Erzeugen des Temperaturgradienten mittels der Glühlampe aufweist.

## Revendications

1. Procédé de coupe de forme d'une feuille de verre, le procédé comprenant les étapes consistant à placer la feuille de verre sur un plan d'appui ; à réaliser au moins une ligne d'incision ayant au moins un tronçon incurvé sur une surface étendue de la feuille puis à rompre la feuille le long de ladite ligne d'incision, **caractérisé en ce que** la rupture de ladite feuille est effectuée en utilisant au moins une ampoule électrique ayant au moins une source incandescente, en dirigeant le faisceau thermique émis par la source incandescente vers la ligne d'incision sur une surface étendue de ladite feuille sur laquelle ladite ligne d'incision est obtenue ou sur une surface étendue de ladite feuille opposée à celle sur laquelle ladite ligne d'incision est obtenue ; en générant un gradient thermique entre les surfaces opposées de ladite feuille et un front de rupture spontanée en un point de la ligne d'incision uniquement avec ladite ampoule électrique, et en déplaçant ladite ampoule électrique et ladite feuille l'une par rapport à l'autre et ledit faisceau thermique le long d'une trajectoire parallèle ou coïncidant avec ladite ligne d'incision, provoquant ainsi l'avancement spontané progressif du front de rupture de la feuille le long de la ligne d'incision.

2. Procédé selon la revendication 1, **caractérisé en ce qu'**il comprend la réalisation d'une ligne d'incision respective sur chacune des surfaces opposées de la feuille de verre et la direction d'un faisceau thermique respectif vers l'une ou les deux desdites lignes d'incision. I

3. Procédé selon la revendication 1 ou 2, **caractérisé en ce qu'**il comprend la direction du faisceau thermique émis par l'une desdites sources thermiques vers au moins une zone de focalisation coupant ladite feuille de verre et traversée par ladite ligne de coupe.

4. Procédé selon l'une quelconque des revendications précédentes, **caractérisé en ce qu'**il comprend la concentration du faisceau thermique émis par ladite source thermique en un point de focalisation qui peut soit couper ladite feuille de verre, soit ne pas la couper.

5. Procédé selon la revendication 4, **caractérisé en ce que** ledit point de focalisation est disposé à l'intérieur de ladite ligne de marquage.

6. Procédé selon la revendication 4, **caractérisé en ce que** ledit point de focalisation est tangent à l'une desdites surfaces étendues de ladite feuille de verre.

7. Procédé selon l'une quelconque des revendications précédentes, **caractérisé en ce qu'**il comprend l'interception d'au moins une partie dudit faisceau thermique traversant ladite feuille et sa réflexion sur la feuille elle-même.

8. Procédé selon l'une quelconque des revendications 4 à 6, **caractérisé en ce que** la concentration dudit faisceau thermique est effectuée en utilisant des moyens de réflexion entourant au moins partiellement ladite source thermique pour dévier ledit faisceau thermique émis sur ladite source thermique.

9. Procédé selon la revendication 8, **caractérisé en ce que** la concentration dudit faisceau thermique est effectuée en utilisant des moyens de focalisation qui sont différents et distincts desdits moyens de réflexion et en déviant au moins une partie dudit faisceau thermique soit direct soit réfléchi par lesdits moyens de réflexion et en le focalisant en un autre point de focalisation coïncidant avec ou distinct dudit point de focalisation.

10. Procédé selon l'une quelconque des revendications précédentes, **caractérisé en ce qu'**il comprend le préchauffage de ladite feuille avec une source thermique différente de ladite ampoule avant de générer ledit gradient thermique avec ladite ampoule.
